(19) Europäisches Patentamt
European Patent Office
Office européen des brevets

(11) **EP 3 839 476 B1**

(12) # EUROPÄISCHE PATENTSCHRIFT

(45) Veröffentlichungstag und Bekanntmachung des Hinweises auf die Patenterteilung:
**30.08.2023 Patentblatt 2023/35**

(21) Anmeldenummer: **19216570.2**

(22) Anmeldetag: **16.12.2019**

(51) Internationale Patentklassifikation (IPC):
**G01N 13/02** *(2006.01)*   **G01N 15/14** *(2006.01)*
**G01N 35/10** *(2006.01)*   **B01L 3/02** *(2006.01)*

(52) Gemeinsame Patentklassifikation (CPC):
**G01N 13/02; G01N 35/1011; G01N 35/1016;**
G01N 15/1436; G01N 2013/0241; G01N 2015/1481

(54) **VORRICHTUNG UND VERFAHREN ZUR BESTIMMUNG EINER POSITION UND/ODER EINER AUSDEHNUNG EINES TROPFENS**

METHOD AND DEVICE FOR DETERMINING A POSITION AND/OR THE EXPANSION OF A DROP

DISPOSITIF ET PROCÉDÉ DE DÉTERMINATION D'UNE POSITION ET/OU D'UNE EXTENSION D'UNE GOUTTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.06.2021 Patentblatt 2021/25**

(73) Patentinhaber: **TECAN TRADING AG**
**8708 Männedorf (CH)**

(72) Erfinder:
• **Zerza, Gerald**
**5020 Salzburg (AT)**

• **Grassl, Josef**
**83471 Schönau am Königsee (DE)**
• **Schüller, Alwin**
**5202 Neumarkt am Waller-see (AT)**

(74) Vertreter: **Troesch Scheidegger Werner AG**
**Schwäntenmos 14**
**8126 Zumikon (CH)**

(56) Entgegenhaltungen:
**US-A- 4 328 801**    **US-A1- 2012 095 433**
**US-A1- 2014 206 093**

EP 3 839 476 B1

**Beschreibung**

Die vorliegende Erfindung betrifft eine Vorrichtung zur Bestimmung einer Position und/oder einer Ausdehnung eines Tropfens. Die Erfindung bezieht sich weiter auf ein Messgerät umfassend die Vorrichtung, auf einen Pipettierroboter umfassend die Vorrichtung, auf einen Pipettierroboter umfassend das Messgerät, sowie auf ein Verfahren zur Bestimmung einer Konzentration einer Substanz in einem Tropfen, insbesondere zur Bestimmung einer Konzentration von Nukleinsäuren wie RNA oder DNA, von Proteinen oder von anderen biologische oder organischen Substanzen. Weiter betrifft die Erfindung ein Verfahren zum Halten eines Tropfens im Positionsbestimmungsraum der Vorrichtung, sowie ein Verfahren zum Regeln einer Tropfengrösse.

In den technischen Gebieten der Analytik und des Liquid-Handlings ist es wünschenswert, kleine Flüssigkeitsmengen analysieren und handhaben zu können, möglichst, ohne dass sich durch das angewandte Verfahren ein Verlust an zu Beginn vorhandener Flüssigkeit ergibt. Beispielsweise offenbart die internationale Veröffentlichungsschrift WO 2014/114500 A1 ein optisches Messgerät, mittels dessen ein an einer Pipettenspitze hängender Flüssigkeitstropfen analysiert werden kann. Mit diesem Messgerät ist ein Umfüllen in einen weiteren Behälter oder ein Kontakt mit Lichtleitern etc. nicht notwendig zur Durchführung der Messung. Derlei Massnahmen würden unvermeidlich zu einem Flüssigkeitsverlust führen. Nachteilig kann dabei aber sein, dass die Genauigkeit oder die Wiederholbarkeit der Messergebnisse bei einem hängenden Tropfen geringer ausfallen kann, als wenn die Probe zu Messung in einem Behälter, z.B. in einem Well einer Mikroplatte, aufgenommen wäre.

Das Dokument US 4 328 801 A nach dem Stand der Technik betrifft eine Vorrichtung zur intravenösen Flussregulierung, wobei die Messung des Volumens jedes Tropfens wichtig ist. Um genaue Volumenmessungen der hängenden Tröpfchen zu erreichen, offenbart D1 eine optische Anordnung, die zwei senkrechte Lichtstrahlen verwendet, was zu einer größeren Genauigkeit für Volumenmessungen eines Tröpfchens führt, dank der unterschiedlichen Betrachtungsrichtungen.

Die Aufgabe der vorliegenden Erfindung bestand darin, im Zusammenhang mit der Handhabung von Flüssigkeitsportionen oder Messungen an Flüssigkeitsportionen eine alternative Lösung zur Aufnahme in einem Behälter zur Verfügung zu stellen. Eine weitere Aufgabe der Erfindung bestand darin, die Genauigkeit der Bestimmung einer Konzentration einer Substanz in einen Tropfen zu verbessern.

Erfindungsgemäss wird die Aufgabe durch eine Vorrichtung nach Anspruch 1 gelöst.

Bei der erfindungsgemässen Vorrichtung handelt es sich um eine Vorrichtung zur Bestimmung einer Position und/oder einer Ausdehnung eines Tropfens in einem Positionsbestimmungsraum. Alternativ zur Positionsbestimmung kann die Vorrichtung dazu ausgelegt sein, eine Ausdehnung des Tropfens, beispielsweise einen Durchmesser des Tropfens, zu bestimmen. Die Vorrichtung kann dazu ausgelegt sein, die Ausdehnung des Tropfens in Kombination mit der Bestimmung der Position vorzunehmen.

Die erfindungsgemässe Vorrichtung umfasst eine Kamera mit einem Objektiv und einen Strahlteiler im Aufnahmebereich der Kamera. Der Aufnahmebereich der Kamera liegt vor dem Objektiv und umfasst den Raumbereich, der vom Objekt auf den Bildsensor der Kamera abgebildet werden kann.

Die Vorrichtung ist so ausgestaltet, dass Licht vom Positionsbestimmungsraum herkommend sowohl entlang einem ersten Lichtpfad ins Objektiv der Kamera gelangen kann als auch entlang einem zweiten Lichtpfad ins Objektiv der Kamera gelangen kann. Licht ist einerseits entlang dem ersten Lichtpfad an einem ersten Reflektorelement in Richtung Strahlteiler reflektierbar und durch den Strahlteiler hindurch zum Objektiv hin durchstrahlbar. Licht ist andererseits entlang dem zweiten Lichtpfad an einem zweiten Reflektorelement in Richtung Strahlteiler reflektierbar und am Strahlteiler zum Objektiv hin reflektierbar.

Das heisst, Licht aus dem Positionsbestimmungsraum gelangt auf zwei separaten Wegen zum Strahlteiler, entweder via das erste Reflektorelement oder via das zweite Reflektorelement. Im ersten Fall gelangt zumindest ein Teil des Lichts aufgrund der teilweisen Durchlässigkeit des Strahlteilers durch den Strahlteiler hindurch zur Kamera. Im zweiten Fall wird das Licht zumindest teilweise in Richtung der Kamera reflektiert. Der Strahlteiler bildet also eine optische Verzweigung. Er lässt Licht teilweise durch und reflektiert Licht teilweise.

Auf diese Weise kann die Kamera gleichzeitig oder nacheinander Bilder aus zwei verschiedenen Blickrichtungen auf den Positionsbestimmungsraum aufnehmen. Wenn sich ein Tropfen im Positionsbestimmungsraum befindet, kann dessen dreidimensionale Position aus der Kombination der Bilder aus verschiedenen Blickrichtungen ermittelt werden. Weiter kann auch eine Ausdehnung des Tropfens aus diesen Bildern bestimmt werden, zum Beispiel anhand der Anzahl Pixel, welche das Bild des Tropfens auf dem Bildsensor einnimmt. Die Ausdehnung des Tropfens kann beispielweise ein Durchmesser des Tropfens in horizontaler Richtung sein. Die Ausdehnung des Tropfens kann beispielsweise eine Projektionsfläche des Tropfens in einer Projektion entlang einer horizontalen Richtung sein.

Ein Lichtpfad ist der geometrische Weg, dem Licht weiter folgt, wenn Licht auf dem Lichtpfad und in Richtung des Lichtpfads eingestrahlt wird, wobei Reflexions- und Brechungswirkung von optischen Elementen berücksichtigt ist. Optische Elemente, in der erfindungsgemässen Vorrichtung sind dies namentlich das erste und zweite Reflektorelement, der Strahlteiler und das Objektiv der Kamera, definieren die möglichen Lichtpfade, auch wenn kein Licht in der Vorrichtung vorhanden ist. Zusätzlich zum ersten und zweiten Lichtpfad kann je ein ganzes Bündel von möglichen Lichtpfaden via das erste respektive das zweite Reflektorelement vom Positionsbestimmungsraum zur Kamera führen. Wichtig ist, dass mindestens ein erster Lichtpfad via das erste Reflektorelement und mindestens ein zweiter Lichtpfad via das zweite Reflektorelement vom Positionsbestimmungsraum zur Kamera existiert.

Die Erfinder haben erkannt, dass basierend auf der erfindungsgemässen Vorrichtung die genaue dreidimensionale Position und, je nach Bedarf zusätzlich oder alternativ, die Ausdehnung eines Tropfens, ausreichend genau bestimmt werden kann, sodass eine Aufnahme des Tropfens in einem Behälter oder ein Festlegen einer Dimension des Tropfens zwischen zwei Platten nicht nötig ist. Exaktes Durchstrahlen einer Flüssigkeitsmenge an einer vorgegebenen Stelle, z.B. in der Ebene der grössten horizontalen Ausdehnung eines Tropfens, Halten einer Flüssigkeitsmenge an einer vorgegebenen Stelle, Festlegen eines vorgegebenen Durchmessers einer Flüssigkeitsmenge, etc. sind mit der erfindungsgemässen Vorrichtung möglich, ohne dass die Flüssigkeitsmenge dazu in einem Behälter aufgenommen sein muss. Dies ermöglicht es, eine Vielzahl von Messungen oder Handhabungsschritten direkt an einem Tropfen durchzuführen. Insbesondere kann es sich dabei um einen hängenden Tropfen, z.B. um einen an der Öffnung einer Pipettenspitze hängenden Tropfen handeln. Die erfindungsgemässe Vorrichtung ermöglicht es bei geeigneter Ausgestaltung auch, die Bestimmung einer Position eines fallenden Tropfens zu einem bestimmten Zeitpunkt vorzunehmen.

Insbesondere ist eine Positionsbestimmung in Relation zu einem Strahlengang eines optischen Messgeräts möglich, wie unten im Zusammenhang mit dem erfindungsgemässen Messgerät noch detailliert erläutert wird.

Die Position weiterer Objekte ausser dem Tropfen ist ebenfalls möglich, sodass eine relative Position des Tropfens zu einem weiteren Objekt mittels der Vorrichtung bestimmt werden kann.

Eine erste Pfadlänge des ersten Lichtpfades vom Schnittpunkt im Positionsbestimmungsraum bis zum Strahlteiler kann von einer zweiten Pfadlänge des zweiten Lichtpfades vom Schnittpunkt im Positionsbestimmungsraum bis zum Strahlteiler abweichen. Bei der Bestimmung von Dimensionen aus den Bildern kann in diesem Fall ein Umrechnungsfaktor angewendet werden, der von jeweiligen Pfadlänge abhängig ist und den daraus resultierenden abweichenden Vergrösserungs- resp. Verkleinerungsfaktor kompensiert.

Erfindungsgemäss schneiden sich der erste und der zweite Lichtpfad in einem Schnittpunkt im Positionsbestimmungsraum.

Weiter erfindungsgemäss definieren Abschnitte des ersten und zweiten Lichtpfades zwischen dem Schnittpunkt im Positionsbestimmungsraum und dem ersten beziehungsweise dem zweiten Reflektorelement eine erste Ebene, es definieren Abschnitte des ersten und zweiten Lichtpfades zwischen dem Strahlteiler und dem ersten beziehungsweise zweiten Reflektorelement eine zweite Ebene. Dabei ist die zweite Ebene gegenüber der ersten Ebene gekippt angeordnet.

Das heisst, die erste und die zweite Ebene schneiden sich unter einem Winkel grösser als Null. Die Lage der ersten und zweiten Ebene gemäss Erfindung lässt sich dadurch erreichen, dass das erste und das zweite Reflektorelement gegenüber einer Ebene des Strahlteilers verkippt angeordnet sind. Wären Ebene des Strahlteils und das erste und zweite Reflektorelement in zueinander parallelen Ebenen angeordnet, so wären die oben definierte erste und zweite Ebene identisch und nicht gegeneinander gekippt angeordnet.

Dies ermöglicht es, die Kamera ausserhalb der ersten Ebene anzuordnen. Wie die Erfinder erkannt haben, ist es damit insbesondere möglich, den Positionsbestimmungsraum der Vorrichtung an einer Stelle in einer die Vorrichtung umfassenden Einrichtung oder Anlage unterzubringen, an welcher der verfügbare Platz seitlich neben dem Positionsbestimmungsraum beschränkt ist.

Ausführungsformen der Vorrichtung ergeben sich aus den Merkmalen der abhängigen Ansprüche 2 bis 6.

In einer Ausführungsform der Vorrichtung schneiden sich der erste und der zweite Lichtpfad rechtwinklig.

In einer Ausführungsform der Vorrichtung ist eine erste Pfadlänge des ersten Lichtpfads vom Schnittpunkt im Positionsbestimmungsraum bis zum Strahlteiler gleich gross wie eine zweite Pfadlänge des zweiten Lichtpfades vom Schnittpunkt im Positionsbestimmungsraum bis zum Strahlteiler.

In dieser Ausführungsform sind die beiden Bilder aus den unterschiedlichen Blickrichtungen auf den Positionsbestimmungsraum besonders einfach kombinierbar, da keine Verzerrung der Grössen aufgrund unterschiedlicher Weglängen vom Tropfen zur Kamera auftritt. In dieser Ausführungsform können aus den Bildern ermittelte Dimensionen direkt verglichen werden und es ist keine Umrechnung zwischen Tropfen- resp. Schattengrössen, die über den ersten resp. zweiten Lichtpfad aufgenommen wurden, notwendig.

In einer Ausführungsform der Vorrichtung umfasst die Vorrichtung weiter ein erstes und eine zweites Beleuchtungselement. Das erste Beleuchtungselement und das erste Reflektorelement sind auf einander gegenüberliegenden Seiten des Positionsbestimmungsraums angeordnet. Das zweite Beleuchtungselement und das zweite Reflektorelement sind auf einander gegenüberliegenden Seiten des Positionsbestimmungsraums angeordnet. Dabei ist das erste Beleuchtungselement dazu ausgelegt, einen Tropfen im Positionsbestimmungsraum parallel zu einer Richtung des ersten Lichtpfads vor dem ersten Reflektorelement zu beleuchten und das zweite Beleuchtungselement dazu ausgelegt ist, einen Tropfen im Positionsbestimmungsraum parallel zu einer Richtung des zweiten Lichtpfads vor dem zweiten Reflektorelement zu beleuchten.

Mit dieser Ausführungsform der Vorrichtung nimmt die Kamera eine Art Schattenbild auf. Wenn sich ein Tropfen im Positionsbestimmungsraum befindet, erhält er sowohl entlang dem ersten als auch entlang dem zweiten Lichtpfad eine Beleuchtung von hinten, d.h. von der Seite, welche entlang dem Lichtpfad gesehen von der Kamera abgewandt ist. Das erste und zweite Beleuchtungselemente kann je eine Lichtquelle, wie z.B. eine LED (Light Emitting Diode) oder eine Glühlampe aufweisen. Die Lichtquelle kann monochromatisches Licht ausstrahlen oder es kann sich auch um eine breitbandige Lichtquelle handeln, beispielsweise mit weissem Licht. Die Beleuchtungselemente können beispielsweise zusätzlich eine oder mehrere Linsen aufweisen. Mit Linsen kann beispielsweise von den Beleuchtungselement ausgehendes Licht in einen grösseren Querschnitt parallel zum jeweiligen Lichtpfad ausgerichtet werden, wodurch die in der Kamera verfügbare Lichtintensität entlang dem jeweiligen Lichtpfad erhöht werden kann. Die Beleuchtungselemente können beispielsweise Diffusor-Elemente, wie z.B. aufgeraute Glas- oder Kunststoffplatten, umfassen. Das erste und zweite Beleuchtungselement können in dieser Ausführungsform bezüglich einem Mittelpunkt des Positionsbestimmungsraums um 90° gegen einander versetzt angeordnet sein.

In einer Ausführungsform der Vorrichtung, welche ein erstes und ein zweites Beleuchtungselement umfasst, sind das erste und das zweite Beleuchtungselement dazu ausgelegt, den Positionsbestimmungsraum zeitlich abwechselnd gar nicht zu beleuchten oder je einzeln zu beleuchten. Insbesondere können das erste und das zweite Beleuchtungselement im Wesentlichen baugleich aufgebaut sein.

In der zeitlichen Phase ganz ohne Beleuchtung können beispielsweise optischen Messungen durchgeführt werden, in denen Licht von den Beleuchtungsquellen stören würde. Während ein einzelnes Beleuchtungselement eingeschaltet ist, kann ein Bild aus der entsprechenden Richtung von der Kamera aufgenommen werden, welches völlig unbeeinflusst von möglichen Reflexionen von Licht aus dem jeweils anderen der ersten und zweiten Beleuchtungselemente ist.

In einer Ausführungsform der Vorrichtung liegen der Strahlteiler, das erste Reflektorelement, das zweite Reflektorelement und die Kamera ausserhalb eines Bereichs, welcher den Positionsbestimmungsraum und dessen gedachte Fortsetzung in Richtung der Schwerkraft umfasst.

In dieser Anordnung der Elemente der Vorrichtung ist die mögliche Fallrichtung des Tropfens berücksichtigt. Auf diese Weise kann ein Benetzen oder Verschmutzen der Elemente durch unbeabsichtigtes Herunterfallen des Tropfens vermieden werden. Beispielsweise können die Elemente der Vorrichtung, insbesondere das erste und zweite Reflektorelement, bezüglich der Richtung der Schwerkraft seitlich des Positionsbestimmungsraums angeordnet sein. Insbesondere kann das Objektiv der Kamera ausserhalb des Bereichs angeordnet sein, in den ein Tropfen fallen kann.

Die Ausführungsformen der Vorrichtung sind beliebig kombinierbar, soweit sie sich nicht gegenseitig ausschliessen.

In einen weiteren Aspekt bezieht sich die Erfindung auf Messgerät nach Anspruch 7.

Das erfindungsgemässe Messgerät kann ein Messgerät zur Messung einer Absorption einer elektromagnetischen Strahlung in einem Tropfen sein. Alternativ oder in Kombination mit der Einrichtung zur Absorptionsmessung kann das Messgerät auch ein Messgerät zur Messung einer durch eine elektromagnetische Strahlung in einem Tropfen angeregten Fluoreszenz sein. Das Messgerät umfasst eine erfindungsgemässe Vorrichtung zur Bestimmung einer Position und/oder einer Ausdehnung eines Tropfens in einem Positionsbestimmungsraum. Das Messgerät umfasst weiter eine Strahlungsquelle elektromagnetischer Strahlung und einen Detektor für elektromagnetische Strahlung. Dabei ist das Messgerät derart ausgestaltet, dass elektromagnetische Strahlung entlang einem Strahlungspfad ausgehend von der Strahlungsquelle via einen Tropfen im Positionsbestimmungsraum beim Detektor eintreffen kann. Elektromagnetische Strahlung kann vom der Strahlungsquelle direkt oder indirekt zum Tropfen gelangen, wobei für den indirekten Weg beispielsweise ein Strahlungspfad via Monochromator oder durch einen Glasfaserlichtleiter hindurch, denkbar sind. Die erfindungsgemässe Vorrichtung, welche Teil des erfindungsgemässen Messgeräts ist, ist dazu ausgelegt, die Position des Tropfens in Relation zum Strahlungspfad zu bestimmen.

Das Messgerät kann beispielsweise dazu ausgelegt sein, die Absorption elektromagnetischer Strahlung bei mehreren Wellenlängen auszuwerten oder über ein Spektrum von Wellenlängen auszuwerten. Im Fall einer Absorptionsmessung durchquert elektromagnetische Strahlung den Tropfen und gelangt danach in den Detektor, wo die Intensität derjenigen Wellenlänge ausgewertet wird, die auf den Tropfen eingestrahlt wurde. Im Fall einer Fluoreszenzmessung wird durch die eintreffende Strahlung eine Fluoreszenz einer Substanz im Tropfen angeregt und elektromagnetische Strahlung einer anderen Wellenlänge erzeugt. Der Detektor misst dann die Intensität der anderen Wellenlänge, z.B. von sichtbarem Licht oder InfrarotStrahlung, bei einer auf den Tropfen eingestrahlten elektromagnetischen Strahlung im UV-Bereich. Im Fall der Fluoreszenzmessung ist der Detektor beispielsweise in einer von der Einfallsrichtung der auf den Tropfen einfallenden Strahlungsrichtung abweichenden Richtung positioniert, beispielsweise in einer um 90° abweichenden Richtung. Es sind auch mehrere Detektoren zur Fluoreszenz-Messung möglich, beispielsweise beidseitig der Einfallsrichtung der eingestrahlten elektromagnetischen Strahlung, je in einer um 90° abweichenden Richtung. Absorbanz- oder Fluoreszenz-Messung können beispielsweise kombiniert in einer Ausführungsform des Messgeräts vorgesehen sein. Beispielsweise kann die Einstrahlung für Absorbanz- und Fluoreszenzmessung durch dieselbe Strahlungsquelle realisiert sein. Ein erster Detektor in gerader Linie in Einstrahlrichtung hinter dem Tropfen kann für die Absorbanz-Messung verwendet werden und ein zweiter Detektor, mit Empfindlichkeit in einem anderen Wellenlängenbereich kann in einer vom Tropfen ausgehenden, senkrecht zur Richtung des ersten Detektors liegenden Richtung angeordnet sein und zur Messung einer Fluoreszenz dienen. Eine andere Möglichkeit eine kombinierten Messgeräts für Absorption und Fluoreszenz kann durch Anordnung der Detektoren und Strahlungsquellen auf zwei verschiedenen Ebenen realisiert werden, wobei zumindest eine der Ebenen mit der erfindungsgemässen Vorrichtung versehen ist.

Ein solches Messgerät kann als "Tropfenspektrometer" bezeichnet werden. Die Erfinder haben erkannt, dass zum Betrieb eines solchen Tropfenspektrometers eine präzise Kontrolle über die Position des Tropfens und die Tropfengrösse entscheidend ist für genaue Messresultate. Eine Positioniergenauigkeit von besser als 70 um ist bevorzugt. Besonders bevorzugt ist eine Positioniergenauigkeit von besser als 50 um. Durch die erfindungsgemässe Vorrichtung ist das erfindungsgemässe Messgerät mit einem optischen System versehen, welches auf überraschend einfach Art und Weise mittels einer einzigen Kamera Positionsinformation über einen Tropfen in drei Dimensionen erfassen kann. Zudem kann dieses optische System in einer äusserst platzsparenden Anordnung angebracht werden.

Eine Ausführungsform des Messgeräts ergibt sich aus den Merkmalen des abhängigen Anspruchs 8.

In einer Ausführungsform des Messgeräts schneiden sich der erste Lichtpfad, der zweite Lichtpfad und der Strahlungspfad in einem gemeinsamen Schnittpunkt im Positionsbestimmungsraum.

Die Positionsbestimmung eines Tropfens in Relation zum Strahlungspfad ist besonders präzise, wenn der Tropfen im gemeinsamen Schnittpunkt der Lichtpfade und des Strahlungspfads angeordnet ist. Beispielsweise können die beiden Lichtpfade und der Strahlungspfad im Bereich des Schnittpunktes in einer gemeinsamen Ebene liegen. Beispielsweise können sich die beiden Lichtpfade untereinander in einen Winkel von 90° schneiden und den Strahlungspfad in einem Winkel von 45° schneiden.

In einem weiteren Aspekt bezieht sich die Erfindung auf einen Pipettierroboter nach Anspruch 9 oder auf einen Pipettierroboter nach Anspruch 10.

Ein erfindungsgemässer Pipettierroboter umfasst eine erfindungsgemässe Vorrichtung zur Bestimmung einer Position und/oder einer Ausdehnung eines Tropfens in einem Positionsbestimmungsraum. Der Pipettierroboter ist dazu ausgelegt

-    eine Pipettenspitze in den Positionsbestimmungsraum der Vorrichtung zu bewegen,

-    einen Tropfen einer Flüssigkeit ausserhalb einer Öffnung der Pipettenspitze auszubilden, und

-    die Position des ausgebildeten Tropfens im Positionsbestimmungsraum anhand mindestens eines mit der Kamera aufgenommenen Bildes zu bestimmen.

Der Pipettierroboter ist beispielsweise ein Drei-Achsen-Roboter, welcher die Pipettenspitze in drei Koordinatenrichtung eines kartesischen Koordinatensystems bewegen kann. Der Pipettierroboter umfasst beispielsweise Mittel zum Aspirieren und/oder Dispensieren einer Flüssigkeit. Der Pipettierroboter kann weiter Halterungen für Mikroplatten umfassen.

Ein weiterer erfindungsgemässer Pipettierrobotor umfasst ein erfindungsgemässes Messgerät zur Messung einer Absorption einer elektromagnetischen Strahlung in einem Tropfen und/oder zur Messung einer durch eine elektromagnetische Strahlung in einem Tropfen angeregte Fluoreszenz. Der Pipettierroboter umfasst weiter Mittel zum Bewegen mindestens einer Pipettenspitze in mindestens einer Bewegungsrichtung. Der Pipettierroboter ist dazu ausgelegt

-    die mindestens eine Pipettenspitze in den Positionsbestimmungsraum der Vorrichtung zu bewegen,

-    einen Tropfen einer Flüssigkeit ausserhalb einer Öffnung der Pipettenspitze auszubilden,

-    die Position und/oder eine Ausdehnung des ausgebildeten Tropfens im Positionsbestimmungsraum anhand mindestens eines mit der Kamera aufgenommenen Bildes zu bestimmen, und

-    unter Verwendung des Messgeräts eine Absorption einer elektromagnetischen Strahlung in dem Tropfen zu messen und/oder eine durch eine elektromagnetische Strahlung in einem Tropfen angeregte Fluoreszenz zu messen.

Eine Aufgabe der Erfindung wird durch ein Verfahren nach Anspruch 11 gelöst.

Es handelt sich um ein Verfahren zur Bestimmung einer Konzentration einer Substanz in einem Tropfen mittels eines erfindungsgemässen Messgeräts. Das Verfahren umfasst die Schritte:

-    Einbringen des Tropfens in den Positionsbestimmungsraum oder Erzeugen des Tropfens im Positionsbestimmungsraum,

-    Bestimmen der Position des Tropfens in Relation zum Strahlengang des Messgeräts,

-    Bestimmen der Ausdehnung des Tropfens,

-    Ermitteln der optischen Pfadlänge des Strahlengangs im Tropfen,

-    Messen einer Absorption einer elektromagnetischen Strahlung, wobei elektromagnetische Strahlung entlang einem Strahlungspfad ausgehend von der Strahlungsquelle den Tropfen im Positionsbestimmungsraum durchquert und im Detektor eintrifft, wobei eine Strahlungsintensität der Strahlungsquelle mit einer Strahlungsintensität im Detektor in Bezug gesetzt wird, und

- Berechnen der Konzentration in Funktion der gemessenen Absorption und der ermittelten optischen Pfadlänge im Tropfen.

Für die Art und Weise, wie der zu untersuchende Tropfen in den Positionsbestimmungsraum gelangt, gibt es zwei Alternativen. Gemäss der ersten Alternative wird der Tropfen von ausserhalb des Positionsbestimmungsraums in den Positionsbestimmungsraum eingebracht, was beispielsweise durch freien Fall des Tropfens geschehen kann. Eine Bewegung einer Pipettenspitze mit daran hängendem Tropfen in den Positionsbestimmungsraum ist ebenfalls möglich. Gemäss der zweiten Alternative wird der Tropfen im Positionsbestimmungsraum erzeugt, beispielsweise durch Dispensieren aus einer Pipettenspitze, welche sich bereits vor dem Dispensieren im Positionsbestimmungsraum befindet.

Zur Ermittlung der optischen Pfadlänge des Strahlengangs reicht im einfachsten Fall, wenn der Strahlengang einen runden Tropfen an der Stelle seines grössten Durchmessers durchquert die Bestimmung des Tropfendurchmessers aus. Zur Ermittlung der optischen Pfadlänge des Strahlengangs im Tropfen kann eine optische Strahlengang-Simulation herangezogen werden. Letzteres ist dann sinnvoll, wenn der Strahlengang nicht senkrecht auf die Tropfenoberfläche auftrifft und Brechungseffekte berücksichtigt werden müssen. Dabei wird der Brechungsindex des Tropfens bei der Wellenlänge der elektromagnetischen Strahlung berücksichtigt. Für einen Wassertropfen liegt der Brechungsindex n für sichtbares Licht bei ca. n = 1.33 für eine Wellenlänge von 600 nm. Der Brechungsindex von Wasser ist im nahen Infrarot-Bereich kleiner als für sichtbares Licht und steigt im Bereich des nahen Ultravioletts an, bis ca. n = 1.5 für eine Wellenlänge von 200 nm. Die Simulation kann für ein Bündel von Strahlen durchgeführt werden, um den Effekt der geometrischen Situation auf die im Detektor eintreffende Strahlungsintensität zu berücksichtigen.

Der Zusammenhang zwischen einer Konzentration eines absorbierenden Materials kann anhand des Lambert-Beer-Gesetzes bestimmt werden.

Es gilt gemäss Lambert-Beer-Gesetz der Zusammenhang

$$D = \log_{10} (I_0/I) = \varepsilon \, C \, L$$

wobei D die Absorbanz, $I_0$ die Intensität der einfallenden Strahlung (bei Wellenlänge 1), I die Intensität der Strahlung nach passieren des absorbierenden Materials (bei Wellenlänge $\lambda$), C die Konzentration des absorbierenden Materials, L die Länge des optischen Pfads im absorbierenden Material und $\varepsilon = \varepsilon(\lambda)$ der (wellenlängenspezifischen) Absorptionskoeffizient.

Varianten des Verfahrens ergeben sich aus den Merkmalen der abhängigen Ansprüche 12 und 13.

In einer Variante des Verfahrens wird eine erste Ausdehnung des Tropfens vor dem Schritt des Messens bestimmt und eine zweite Ausdehnung des Tropfens wird nach dem Schritt des Messens bestimmt. Ein Mittelwert der ersten und zweiten Ausdehnung des Tropfens wird der Bestimmung der Konzentration der Substanz zugrunde gelegt.

Diese Variante des Verfahrens ist besonders zur Anwendung bei Tropfen mit kleinen Volumina geeignet, bei denen das Verhältnis von Oberfläche zu Volumen so gross ist, dass im zeitlichen Verlauf eines Messvorgangs ein merklicher Anteil des Tropfens verdunstet. Durch die Mittelwertbildung wird die effektive Ausdehnung des Tropfens während dem Schritt des Messens genauer erfasst, ohne das Risiko, die Messung durch die Bestimmung der Ausdehnung des Tropfens zu stören. Insbesondere kann die Messung durchgeführt werden, ohne dass Beleuchtungslicht für eine Aufnahme mit der Kamera eingeschaltet sein muss.

In einer Variante des Verfahrens handelt es sich um ein Verfahren zur Bestimmung einer Konzentration von Nukleinsäuren wie RNA (Ribonukleinsäure) oder DNA (Desoxyribonukleinsäure), Proteinen oder anderen biologischen oder organischen Substanzen, wobei die elektromagnetische Strahlung eine für die Substanz charakteristische , für die Bestimmung der Konzentration optimale, Wellenlänge hat. Zum Beispiel wird die Wellenlänge mit der grössten Absorption der jeweiligen Substanz gewählt, resp. im Fall einer Fluoreszenzmessung, wird die am stärksten fluoreszierende Wellenlänge gewählt. Generell kann durch eine Anpassung der Wellenlänge eine Anpassung der Messmethode an den Stoff erreicht werden, dessen Konzentration zu bestimmen ist.

Dieses Verfahren kann insbesondere unter Verwendung eines erfindungsgemässen Pipettierroboters durchgeführt werden.

Ein erstes Anwendungsbeispiel des erfindungsgemässen Verfahrens, in welchem einen Pipettierroboter mit dem Messgerät verwendet wird, ist die Quantifizierung einer Menge an RNA oder DNA, die in einem einzelnen Tropfen enthalten ist. Dazu wird die Absorbanz von elektromagnetischer Strahlung, welche den Tropfen durchquert, bei verschiedenen, für RNA/DNA charakteristischen, Wellenlängen, gemessen. Beispielsweise wird ein Absorptionsspektrum über den Wellenlängenbereich von 230 nm bis 1000 nm aufgenommen. Eine Möglichkeit, die RNA/DNA Konzentration zu bestimmen beruht auf der Auswertung der Absorption bei 260 nm, ggf. unter zusätzlicher Berücksichtigung der Trübheit der Probe durch Messung der Absorption bei einer Wellenlänge von 320 nm. Absorption bei längeren Wellenlängen, also z.B. bei 320 nm, wird hauptsächlich von grösseren Partikeln verursacht, die Licht im sichtbaren Spektrum streuen, welche in diesem Zusammenhang als Verunreinigung gewertet werden. Zusätzlich kann beispielsweise aus dem Verhältnis der Absorptionsmessungen bei den Wellenlängen 260 nm und 280 nm ein Mass für die Reinheit einer DNA-Probe resp. einer RNA-Probe gegenüber einer Verunreinigung mit z.B. Proteinen bestimmt werden, die typischerweise Licht bei 280nm absorbieren. Die Bestimmung des Verhältnisses der Absorptionswerte bei beispielsweise 260nm und 230nm liefert wiederum Rückschlüsse auf eine mögliche Verunreinigung mit Phenolat, Thiocyanat und anderen organischen Verbindungen.

Ein zweites Anwendungsbeispiel des erfindungsgemässen Verfahrens, in welchem einen Pipettierroboter mit dem Messgerät verwendet wird, ist die Quantifizierung einer Menge an Protein, die in einem einzelnen Tropfen enthalten ist. Dazu wird die Absorbanz von elektromagnetischer Strahlung, welche den Tropfen durchquert, bei 280 nm gemessen. Die Absorbanz bei 280 nm der Proteinlösung rührt von den aromatischen Aminosäuren Tryptophan und Tyrosin sowie von Cystein und disulfid-verbrückte Cystein-Reste. Die Proteinkonzentration wird entweder anhand von Literaturwerten berechnet oder durch Vergleich mit einer Kalibrationskurve.

Der Tropfen hängt in diesen Beispielen während der Messung an einer Pipettenspitze. Mit Hilfe der erfindungsgemässen Vorrichtung, welche Teil des Messgeräts ist, wird

a) die Grösse des Tropfens exakt bestimmt, damit die im Tropfen verlaufende optische Pfadlänge akkurat bestimmt werden kann, und
b) die Position der Pipettenspitze so ausgerichtet, dass der für die Absorptionsmessung verwendete Strahlungspfad den hängenden Tropfen an der Stelle seiner grössten horizontalen Ausdehnung und mittig trifft.

Mit diesen Massnahmen werden Messungen mit hoher Genauigkeit und Reproduzierbarkeit erreicht. Die Erfinder haben erkannt, dass ohne diese Massnahmen, welche mit dem erfindungsgemässen Messgerät erst möglich werden, die zur Absorptionsmessung verwendete Strahlung durch die Krümmung eines nicht mittig positionierten Tropfens in schwer zu kontrollierenden Richtungen gebrochen wird. Weiter entspricht die optischen Pfadlänge in einem solchen Fall nicht dem Tropfendurchmesser. Beide Effekte führen zu einer inexakten Messung.

Mit dem erfindungsgemässen Verfahren kann beispielsweise eine Konzentration von DNA in einem Tropfen mit einer unteren Nachweisgrenze von 2 ng/$\mu$l bestimmt werden.

Dieses Verfahren erlaubt eine schnelle und genaue Messung Substanzkonzentration in einem Flüssigkeitstropfen ohne das Flüssigkeit bei der Messung verloren geht. Dieses Verfahren kann beispielsweise in eine Vorbereitungsschritt für weitere Messungen erfolgen, bei denen jeder Verlust an Probenflüssigkeit vermieden werden soll.

Noch weiter bezieht sich die Erfindung auf eine Verfahren nach Anspruch 14.

Bei diesem weiteren erfindungsgemässen Verfahren handelt es sich um ein Verfahren zum Halten eines Tropfens im Positionsbestimmungsraum eines erfindungsgemässen Pipettierroboters. Das Verfahren umfasst die wiederholte Anwendung der folgenden Schritte:

- Bestimmen einer Ist-Position eines an der Öffnung einer Pipettenspitze des Pipettierroboters ausgebildeten Tropfens im Positionsbestimmungsraum anhand mindestens eines mit der Kamera aufgenommenen Bildes,
- Ermitteln einer Abweichung der bestimmten Ist-Position von einer vorgegebenen Soll-Position, und
- Bewegen der Pipettenspitze in eine Richtung, welche die Ist-Position näher an die Soll-Position bringt.

Noch weiter bezieht sich die Erfindung auf eine Verfahren nach Anspruch 15.

Bei diesem weiteren erfindungsgemässen Verfahren handelt es sich um ein Verfahren zur Regelung einer Tropfengrösse eines Tropfens im Positionsbestimmungsraum eines erfindungsgemässen Pipettierroboters, wobei das Verfahren die wiederholte Anwendung der folgenden Schritte umfasst:

- Bestimmen einer Ist-Tropfengrösse eines an der Öffnung einer Pipettenspitze des Pipettierroboters ausgebildeten Tropfens im Positionsbestimmungsraum anhand mindestens eines mit der Kamera aufgenommenen Bildes,
- Ermitteln einer Abweichung der bestimmten Ist-Tropfengrösse von einer vorgegebenen Soll-Tropfengrösse, und
- Ansaugen von Flüssigkeit in die Pipettenspitze oder Ausstossen von Flüssigkeit aus der Pipettenspitze, wobei Ansaugen gewählt wird, wenn die Ist-Tropfengrösse grösser als die Soll-Tropfengrösse ist und wobei Ausstossen gewählt wird, wenn die Ist-Tropfengrösse kleiner als die Soll-Tropfengrösse ist.

Dieses Verfahrens ermöglicht das Regeln des Tropfendurchmessers, indem der Tropfendurchmesser anhand der aufgenommenen Bilder ermittelt wird und eine Druckänderungsvorrichtung des Pipettierroboters, z.B. eine Pumpe, so angesteuert wird, dass bei zu grossem Tropfendurchmesser ein Aspirieren, bei zu kleinem Tropfendurchmesser ein Dispensieren erfolgt. In einer Variante dieses Verfahrens kann das Verfahren auch mit dem oben erwähnten Verfahren zu Halten des Tropfens an einer Ist-Position kombiniert werden.

Eine Regelung der Tropfengröße kann beispielsweise wie folgt durchgeführt werden. Als zu regelnde Tropfengrösse wird der Tropfendurchmesser gewählt. An ein mit der Kamera aufgenommene Schattenbilder aus zwei Richtungen wird je ein Kreis angefittet und je dessen Durchmesser bestimmt. Als Ist-Durchmesser wird der Durchschnitt der beiden durch Fit bestimmten Durchmesser genommen. Der Ist-Durchmesser wird beispielsweise auf einen Soll-Durchmesser von 1,5 - 1,6mm geregelt. Beispielsweise wird zu Beginn vom Pipettor ein etwas grösserer Tropfen erzeugt und dann nach Bedarf etwas Flüssigkeit wieder aufgesogen. Beispielsweise wird die Regelung der Tropfengrösse nach der Positionierung durchgeführt. Beispielsweise wird nach der Positionierung eine Serie von einigen wenigen Bildern mit einer Belichtungszeit von 2 ms aufgenommen. Zusätzlich kann die Tropfengröße vor und nach der Messung, d.h. einer Absorptions- oder Fluoreszenz-Messung, bestimmt werden und die Ergebnisse zur Plausibilisierung eines ungestörten Ablaufs verglichen werden. Auf diese Weise kann beispielsweise verhindert werden, dass Messergebnisse von Messungen verwendet werden, bei denen ein Tropfen zwischenzeitlich eine starke Deformation erfahren hat oder der Tropfen gar von der Pipettenspitze abgefallen ist.

Die Erfinder haben erkannt, dass Tropfen generell im Bereich von Durchmessern zwischen ca. 1,3 - 2,0 mm stabil erzeugbar sind. Der oben genannte Bereich des Soll-Durchmessers von 1,5 - 1,6 mm wurde für die Anwendung als optimaler Kompromiss zwischen einem grossen Durchmesser, der günstig ist für die Messgenauigkeit, und kleinem Durchmesser, der das Risiko des Abfallens des Tropfens reduziert, befunden. Bei geringeren nachzuweisenden Konzentrationen wären etwas größere Tropfen zu bevorzugen. Ab 2,3mm Durchmesser reißen die Tropfen zunehmend ab.

Der Strahldurchmesser der eingestrahlten elektromagnetischen Strahlung kann beispielsweise 0,2 mm betragen. In Kombination mit einem Tropfendurchmesser nahe bei 1,6 mm ist der Strahldurchmesser ca. eine Grössenordnung kleiner als der Tropfendurchmesser. Die effektive optische Pfadlänge kann in diesem Fall hinreichend genau durch den Tropfendurchmesser angenähert werden, der wie oben beschrieben als Ist-Tropfendurchmesser bestimmt wird.

Die Zeitskala des Regelkreises kann beispielsweise an eine Bildaufnahmerate von 50 Bilder pro Sekunde angepasst werden.

Ausführungsbeispiele der vorliegenden Erfindung werden nachstehend anhand von Figuren noch näher erläutert. Es zeigen

Fig. 1 einen schematischen Querschnitt durch die Vorrichtung;

Fig. 2 einen schematischen Querschnitt durch eine Ausführungsform der Vorrichtung;

Fig. 3 in Teilfigur Fig. 3.a) eine perspektivische Ansicht einer Ausführungsform des Messgeräts, in Teilfiguren Fig. 3.b) und 3.c) schematische, perspektivische Darstellungen der geometrischen Lage ausgewählter Elemente aus Fig. 3.a);

Fig. 4 eine Anordnung einer Ausführungsform der Vorrichtung im Zusammenhang mit einem Teil eines Pipettierroboters;

Fig. 5 eine perspektivische Ansicht eines Pipettierroboters mit erfindungsgemässer Vorrichtung;

Fig. 6 eine schematische, perspektivische Ansicht der Situation im Positionsbestimmungsraum für eine Ausführungsform des Messgeräts resp. eine Ausführungsform des Pipettierroboters.

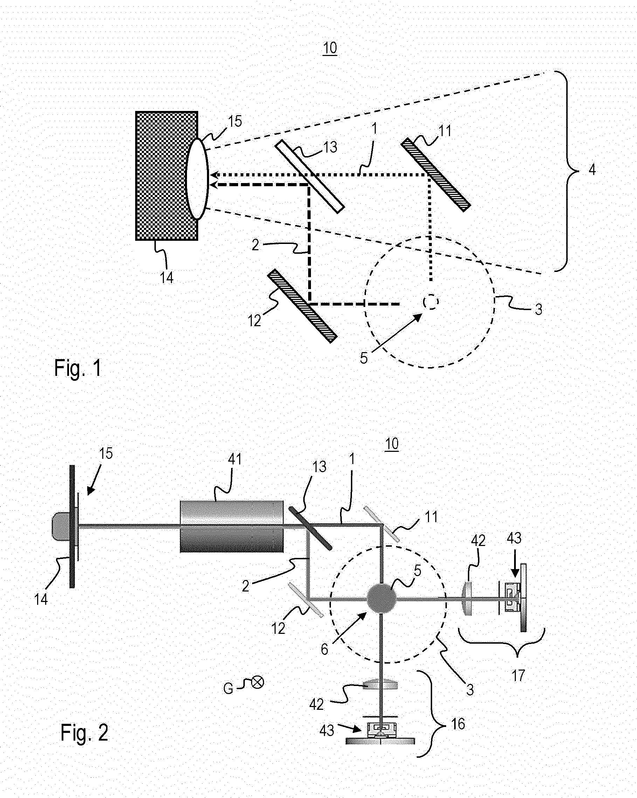

In Figur 1 ist ein schematischer Querschnitt durch die Vorrichtung 10 gezeigt. Ein gestrichelter Kreis zeigt die Lage des Positionsbestimmungsraums 3. Innerhalb des Positionsbestimmungsraums ist als kleinerer gestrichelter Kreis die mögliche Lage eine Tropfens 5 eingezeichnet, dessen Position und/oder Ausdehnung mit Hilfe der Vorrichtung 10 bestimmt werden kann. Die Vorrichtung umfasst eine Kamera 14 mit einem Objektiv 15. Im Aufnahmebereich 4 der Kamera ist ein Strahlteiler 13 angeordnet. Der Aufnahmebereich 4 der Kamera vor dem Objektiv ist schematisch durch gestrichelte Linien begrenzt eingezeichnet. Er entspricht dem Bereich, aus dem einfallendes Licht über das Objektiv auf einen Bildsensor der Kamera gelangen kann. Licht aus dem Positionsbestimmungsraum 3 kann entlang einem ersten Lichtpfad 1, der als gepunkteter Linienzug mit Pfeil eingezeichnet ist, ins Objektiv 15 der Kamera gelangen. Dabei wird das Licht an einem ersten Reflektorelement 11 reflektiert und durch den Strahlteiler 13 hindurch gestrahlt. Licht aus dem Positionsbestimmungsraum 3 kann auch entlang einem zweiten Lichtpfad 2, der als gestrichelter Linienzug mit Pfeil eingezeichnet ist, ins Objektiv der Kamera gelangen. Dabei wird das Licht an einem zweiten Reflektorelement 12 reflektiert und auch am Strahlteiler 13 reflektiert.

In Figur 2 ist ein schematischer Querschnitt durch eine Ausführungsform der Vorrichtung 10 gezeigt. In der hier gezeigten Ausführungsform schneiden sich der erste Lichtpfad 1 und der zweite Lichtpfad 2 im Positionsbestimmungsraum in einem rechten Winkel. In der gezeigten Darstellung ist ein Tropfen 5 vorhanden, welcher gerade am Schnittpunkt 6 der sich schneidenden Lichtpfade angeordnet ist. Der Schnittpunkt 6 liegt im Positionsbestimmungsraum 3, dessen Lage durch eine gestrichelte Linie angezeigt ist. Das erste Reflektorelement 11 und das zweite Reflektorelement 12 sind in der gezeigten Ausführungsform parallel zu einer reflektierenden Fläche des Strahlteilers 13 angeordnet. Die Reflektorelement 11 und 12 sind weiter symmetrisch zu der reflektierenden Fläche des Strahlteilers 13 angeordnet. Auf diese Weise ergeben sich eine erste Pfadlänge des ersten Lichtpfads 1 vom Schnittpunkt 6 bis zum Strahlteiler 13 und eine zweite Pfadlänge des zweiten Lichtpfades 2 vom Schnittpunkt 6 bis zum Strahlteiler, wobei die erste und die zweite Pfadlänge gleich gross sind. Die hier gezeigte Ausführungsform umfasst zusätzlich ein erstes Beleuchtungselement 16 und ein zweites Beleuchtungselement 17. Beide Beleuchtungselemente umfassen in der gezeigten Ausführungsform je eine Leuchtdiode (LED) 43 und je eine Linse 42. Lichtstrahlen entlang dem ersten Lichtpfad 1 und entlang dem zweiten Lichtpfad 2 sind hier ausgehend von der Leuchtdiode bis zur Kamera eingezeichnet. Je ein Beleuchtungselement und ein Reflektorelement befinden sich auf einander gegenüberliegenden Seiten des Positionsbestimmungsraums. Der Tropfen wird durch das erste Beleuchtungselement 16 parallel zum ersten Lichtpfad 1 beleuchtet und durch das zweite Beleuchtungselement parallel zum zweiten Lichtpfad 2 beleuchtet. Die Parallelität von Beleuchtungsrichtung und Lichtpfad wird anhand der Richtung des Abschnitts des jeweiligen Lichtpfades noch vor dem ersten resp. zweiten Reflektorelement bestimmt. Aus Sicht der Kamera wird der Tropfen 5 entlang beider Lichtpfade von hinten beleuchtet und wird in einer Art Schattenbild abgebildet. Alternativ zu der hier gezeigten Beleuchtungssituation kann zeitlich versetzt auch nur je eines der Beleuchtungselemente eingeschaltet sein, sodass der Positionsbestimmungsraum und ein darin befindlicher Tropfen nur von je einem Beleuchtungselement beleuchtet wird. Die hier gezeigten Beleuchtungselemente sind im Wesentlichen baugleich aufgebaut. Eine mögliche Variante der Ausführungsform könnte Leuchtdioden mit unterschiedlicher Farbe umfassen.

Durch das Kreuz im Kreis wird die Richtung G der Schwerkraft angegeben, welche in der gezeigten Situation senkrecht zur Bildebene der Figur liegt. Damit ist der Positionsbestimmungsraum und auch dessen gedachte Fortsetzung in Richtung G der Schwerkraft frei von Elementen der Vorrichtung. Ein ausgehend vom Positionsbestimmungsraum in Richtung der Schwerkraft hinunterfallender Tropfen trifft also keines der Elemente Strahlteiler 13, erstes Reflektorelement 11, zweites Reflektorelement 12 oder Kamera 14.

Eine Relais-Optik 41 befindet sich zwischen dem Strahlteiler 13 und der Kamera 14. Die Kamera kann beispielsweise einen CMOS Bildsensor haben.

Die gezeigte Anordnung kann sehr kompakt gebaut werden. Beispielsweise kann der Abstand vom Schnittpunkt 6 bis zum ersten resp. zweiten Reflektorelement ca. 25 mm betragen und der Abstand vom Schnittpunkt 6 bis zu einer der LED's weniger als 30 mm betragen.

Mit diesen Abmessungen und einer Kamera mit Pixelgrösse 10 Mikrometer kann beispielsweise ein Abbildungssystem realisiert werden, welches eine optische Auflösung von ca. 6 Mikrometer pro Pixel erreicht, d.h. eine Verschiebung eines realen Objekts im Positionsbestimmungsraum um 6 Mikrometer äussert sich in einer Verschiebung des Bildes um ein Pixel. Das optische System führt in diesem Fall zu einer Verkleinerung um einen Faktor von ca. 1.7.

Das optische Layout der gezeigten Ausführungsform ist so ausgestaltet, dass mit nur zwei LED's für die Beleuchtung, zwei Linsen, zwei Spiegeln, einem Beam-Splitter und einer Kamera eine Vorrichtung resultiert, welche zur Bestimmung einer Position und einer Ausdehnung eines Tropfens, beispielsweise im Messraum eines Spektrometers, geeignet ist. Die LED's werden dazu verwendet, den Tropfen aus zwei Richtungen, beispielsweise einer horizontalen x-Richtung und einer dazu senkrechten, ebenfalls horizontalen y-Richtung, zu beleuchten. Dabei kann die Kamera Bilder des Tropfens aus zwei verschiedenen Richtungen, aber aus gleicher Distanz, aufnehmen, wobei Bilder des Tropfens in einer x-z-Ebene und in einer y-z-Ebene produziert werden können. Die z-Richtung ist in diesem Beispiel die senkrechte Richtung. D.h. dreidimensional Positionsinformation des Tropfens kann mit einer Vorrichtung ohne bewegliche Teile erhalten werden. Beispielsweise können zwei separate Bilder durch sequentielles Beleuchten des Tropfens im Positionsbestimmungsraum mit jeweils nur einer der beiden LED's aufgenommen werden. Basierend auf einem derartigen Paar von Bildern können dann sowohl die Grösse des Tropfens als auch die Position des Tropfens in drei Dimensionen über einen Regelkreis, welcher beispielsweise die Ansteuerung eines Pipettierroboter umfasst, geregelt werden.

In diesem Zusammenhang kann von der üblichen Software-Architektur einer Kontrollsoftware, welche vorsieht, dass die Kontrollsoftware gemäss einem vorgegebenen Ablaufplan die einzelnen Module oder Geräte (d.h. Linearachsen, Pumpe, Inkubatoren, Schüttler, Extraktionsmodule, etc.) ansteuert insofern zeitweilig abgewichen werden, als dass in diesem Fall das Messgerät basierend auf den von der erfindungsgemässen Vorrichtung ermittelten Positionsdaten vorgibt, wie sich die Pipette des Pipettierroboters zu bewegen hat.

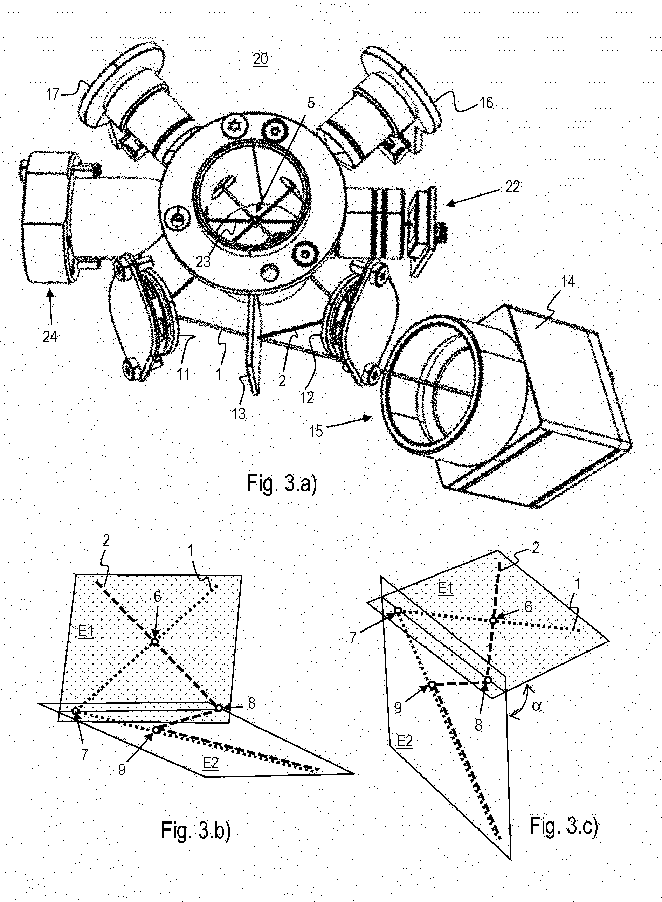

In Figur 3.a) ist eine perspektivische Ansicht einer Ausführungsform des Messgeräts 20 gezeigt. Ein Tropfen 5 befindet sich mittig in einem Positionsbestimmungsraum befindet, der von einer zylindrischen Wandung mit Durchgangslöchern für Lichtpfade 1 und 2 resp. einen Strahlengang 23 versehen ist. Der Tropfen kann in dieser Position beispielsweise an einer nicht gezeigten Pipettenspitze hängen. Das Messgerät umfasst eine erfindungsgemässe Vorrichtung, wie oben beschrieben. Die Vorrichtung umfasst ein erstes Reflektorelement 11, ein zweites Reflektorelement 12, einen Strahlteiler 13 und eine Kamera 14 mit C-Mount 44 zur Befestigung eines Objektivs. Ein erster Lichtpfad 1 und eine zweiter Lichtpfad 2 führen in der oben beschriebenen Art auf zwei unterschiedlichen Wegen vom Positionsbestimmungsraum ins Objektiv der Kamera, das hier aus Gründen der Übersichtlichkeit nicht eingezeichnet ist, dessen Lage aber aus der Lage des C-Mount 44, welcher die Lage des Kamera nahen Endes des Objektivs definiert, hervorgeht. In der gezeigten Ausführungsform umfasst die Vorrichtung weiter ein erstes Beleuchtungselement 16 und ein zweites Beleuchtungselement 17. Licht vom ersten Beleuchtungselement 16 kann durch das oben rechts in der zylindrischen Wandung erkennbare Durchgangsloch in den Bereich des Tropfens 5 eingestrahlt werden. Von dort folgt das Licht weiter dem ersten Lichtpfad 1 durch ein nicht sichtbares Durchgangsloch via erstes Reflektorelement 11, durch den Strahlteiler 13 hindurch ins Objektiv der Kamera. Licht vom zweiten Beleuchtungselement 17 kann durch das oben links in der zylindrischen Wandung erkennbare Durchgangsloch in den Bereich des Tropfens 5 eingestrahlt werden. Von dort folgt das Licht weiter dem zweiten Lichtpfad 2 durch ein nicht sichtbares Durchgangsloch via Reflexion am zweiten Reflektorelement 12 und via Reflexion am Strahlteiler 13 ins Objektiv der Kamera. Erster und zweiter Lichtpfad fallen in der gezeigten Anordnung im Bereich zwischen Strahlteiler 13 und C-Mount 44 zusammen. Das Messgerät 20 umfasst weiter eine nicht dargestellte Strahlungsquelle für elektromagnetische Strahlung und einen Detektor 22 für die elektromagnetische Strahlung. Die Strahlungsquelle kann beispielsweise eine Blitzlampe sein. Ein Strahlungspfad 23 führt von der Strahlungsquelle über einen Monochromator und wird via den Ellipsoidspiegel 24 umgelenkt und fokussiert. Der Strahlungspfad wird durch ein Durchgangsloch in der zylindrischen Wandung, durch den Tropfen 5 und durch ein weiteres, nicht sichtbares, Durchgangsloch hindurch zum Detektor 22, wo eine Strahlungsintensität der elektromagnetischen Strahlung gemessen werden kann. Der erste und zweite Lichtpfad 1, 2 sowie der Strahlungspfad 23 definieren im Bereich des Tropfens eine gemeinsame erste Ebene und schneiden sich in einem gemeinsamen Schnittpunkt. Die beiden Lichtpfade schneiden sich untereinander unter einem Winkel von ca. 90° und schneiden den Strahlungspfad 23 unter einem Winkel von ca. 45°. Durch die gekippte Anordnung des ersten und zweiten Reflektorelements 11, 12 verlassen der erste und zweite Lichtpfad diese Ebene nach der Reflexion am jeweiligen Reflektorelement.

Die Beleuchtungselemente 16, 17 umfassen beispielsweise in einem Gehäuse angeordnet je eine Leuchtdiode und eine vor der Leuchtdiode angeordnete Linse. Die Reflektorelemente 11, 12 sind beispielsweise als planare Spiegel ausgebildet. Bezüglich der reflektierenden Seite hinter den Reflektorelementen 11, 12 angeordnet ist eine Aufhängung zur präzisen Ausrichtung der Spiegel zu erkennen.

Fig. 3.b) zeigt verkleinert, aber im Vergleich zu Fig. 3.a) in unveränderter Ausrichtung, den ersten Lichtpfad 1 und den zweiten Lichtpfad 2. Die erste Ebene E1 ist durch den ersten Lichtpfad 1 und den zweiten Lichtpfad 2 im Bereich zwischen dem Schnittpunkt 6 der Lichtpfade, dem Punkt 7 auf dem ersten Reflektorelement, an dem der erste Lichtpfad umgelenkt wird, und dem Punkt 8 auf dem zweiten Reflektorelement, an dem der zweite Lichtpfad umgelenkt wird, definiert. Die erste Ebene ist gepunktet dargestellt. Der erste Lichtpfad 1 ist als gepunkteter Linienzug, der zweite Lichtpfad 2 als gestrichelter Linienzug dargestellt. Ab den Punkten 7 resp. 8 verlaufen die Lichtpfade in einer zweiten Ebene E2, welche gegenüber der Ebene E1 geneigt ist. Der Punkt 9 auf dem Strahlteiler 13 liegt in der Ebene E2. Ab diesem Punkt fallen die beiden Lichtpfade 1, 2 zusammen.

Fig. 3.c) zeigt dasselbe, wie Fig. 3.b) aber aus einem leicht geänderten Blickwinkel. Zusätzlich ist der Winkel α, unter dem sich die erste Ebene E1 und die zweite Ebene E2 schneiden, eingezeichnet. Der Winkel α kann beispielsweise ca. 90° gross sein. In einer Ausführungsform kann die Ebene E1 insbesondere eine horizontal verlaufende Ebene sein, welche senkrecht zur Richtung G der Schwerkraft angeordnet ist. Die Lichtpfade führen in diesem Fall nach unten ins Objektiv der Kamera, welche platzsparend unterhalb der Ebene E1 angeordnet ist. Die Kamera ist in dieser Anordnung auch ausserhalb einer möglichen Fallrichtung des Tropfens.

Das kompakte Design, welches in der Ausführungsform der Vorrichtung umgesetzt ist, wie sie in den Fig. 3.a) (als Teil des Messgeräts), 3.b) und 3.c) gezeigt ist, erlaubt es, die Kamera unterhalb einer Arbeitsfläche, welche parallel zur Ebene E1 liegt, anzuordnen. Die Reflektorelemente sind gegenüber der Ebene E1, also auch gegenüber der Arbeitsfläche, verkippt angeordnet. Ebenso sind die Reflektorelement gekippt gegenüber einer durch den Strahlteiler definierten Ebene angeordnet. Die durch den Strahlteiler definierte Ebene bildet in diesem Fall auch eine Symmetrieebene der beiden Reflektorelemente.

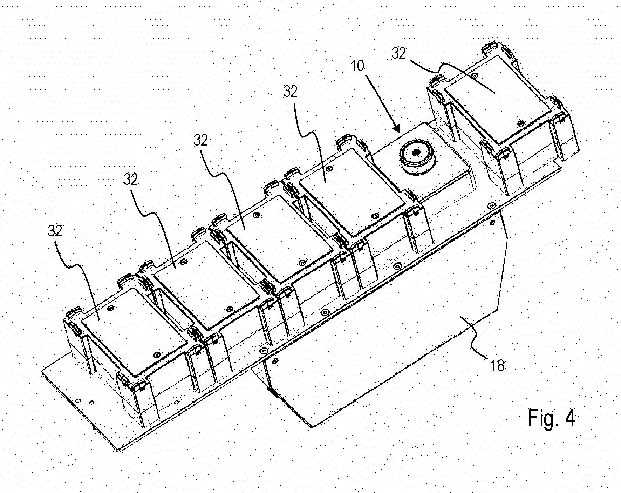

In Figur 4 ist eine beispielhafte Anordnung einer Ausführungsform der Vorrichtung dargestellt, wie sie als Teil eines Pipettierroboters angeordnet sein kann. Vom Pipettierroboter ist nur eine Ablagefläche für Mikroplatten und einige darauf angeordnete Halterungen 32 für Standard Mikroplatten gezeigt. Die Vorrichtung 10 hat eine nach oben offene, runde Zugangs-Öffnung zum Einführen einer Pipettenspitze in den Positionsbestimmungsraum der Vorrichtung, welcher sich innerhalb des quaderförmigen Gehäuses befindet. Ein weiteres Gehäuse 18 ist unterhalb der Ablagefläche für Mikroplatten angeordnet und enthält die - in dieser Ansicht nicht sichtbare - Kamera der Vorrichtung. Das Gehäuse 18 kann weitere Bauteile enthalten, beispielsweise einen Monochromator eines Spektrometers. Die geometrische Anordnung von Positionsbestimmungsraum und Kamera kann in dieser Ausführungsform beispielsweise so gewählt sein, wie in Fig. 3.a) gezeigt. Auf diese Weise entsteht eine sehr platzsparende Anordnung, bei welcher die Vorrichtung nur den Platzbedarf einer einzelnen Halterung für Standard-Mikroplatte hat.

Mit der gezeigten kompakten Bauweise kann die erfindungsgemässe Vorrichtung ideal als Modul in eine Plattform zur Handhabung von Flüssigkeiten integriert werden, insbesondere in eine Plattform, bei welcher die Standfläche eines Moduls entscheidend ist. Die gezeigte Ausführungsform sorgt für eine Einsparung von Platzbedarf auf der Arbeitsfläche.

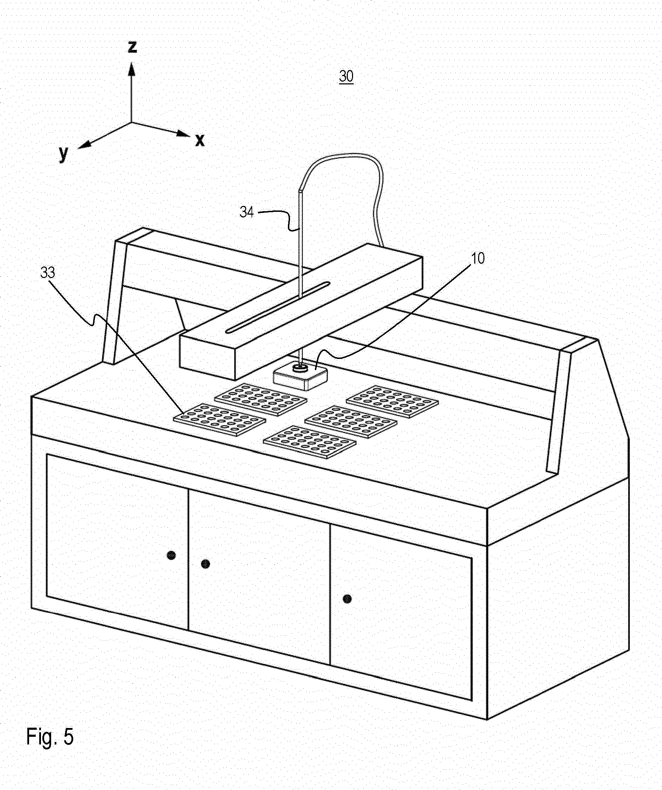

In Figur 5 ist ein Pipettierroboter 30 mit einer erfindungsgemässen Vorrichtung 10 im Kontext einer beispielhaften Anwendung gezeigt. Der Pipettierroboter umfasst ansteuerbare Linierachsen, welche eine Pipette in den drei mit Pfeilen in x-, y- und z-Richtung dargestellten Richtungen eines kartesischen Koordinatensystems bewegen kann. Ein Pipettierkanal 34, an dessen unterem Ende sich eine Pipettespitze befindet, ist durch einen flexiblen Schlauch mit einer Pumpvorrichtung verbunden. Die Pipettenspitze befindet sich direkt über einer Öffnung der Vorrichtung 10. Durch ein Absenken der Pipettenspitze in negativer z-Richtung kann die Pipettenspitze in die Vorrichtung eingefahren werden. Mikroplatten 33 sind auf einer Arbeitsfläche des Pipettierroboters angeordnet. Die gezeigten Mikroplatten haben 4 x 6 Wells, es könnten ebenso auch Mikroplatten mit 8 x 12 Wells oder andere übliche Mikroplatten verwendet werden. Der Platzbedarf der Vorrichtung 10 auf der Arbeitsfläche in Relation zu den Mikroplatten ist realistisch dargestellt. Sie zeigt, welche kompakte Bauweise mit der erfindungsgemässen Vorrichtung möglich ist.

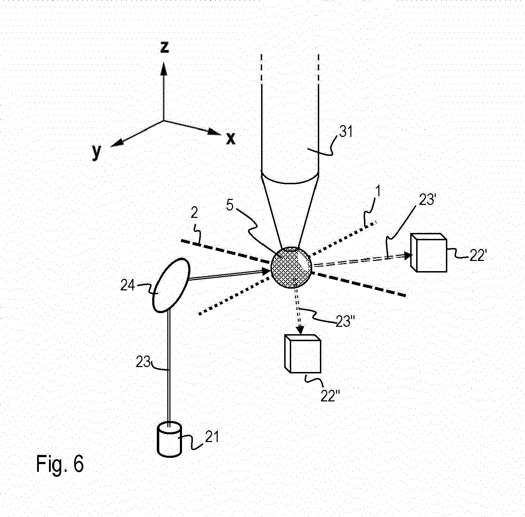

Figur 6 zeigt schematisch die Anordnung von Elementen einer Ausführungsform des Messgeräts resp. des Pipettierroboters im Zusammenhang mit dem Positionsbestimmungsraum der Vorrichtung während einem Messvorgang an einem Tropfen 5. Der Tropfen 5 hängt an einer Pipettenspitze 31, welche durch Linearachsen eines Pipettierroboters in x-, y- und z-Richtung des eingezeichneten kartesischen Koordinatensystems bewegbar ist. Je ein Abschnitt des ersten Lichtpfads 1 und des zweiten Lichtpfads 2 sind als gepunktete resp. gestrichelte Linie eingezeichnet, sodass die Orienterung der weiteren Elemente relativ zu den Lichtpfaden der Vorrichtung erkennbar wird. Ein Strahlungspfad 23 von elektromagnetischer Strahlung geht von der Strahlungsquelle 21 aus und wird über einen Spiegel 24, der beispielsweise ein Ellipsoidspiegel sein kann, in Richtung des Tropfens umgelenkt. In gerader Linie hinter dem Tropfen ist ein Detektor zur Messung der Intensität der elektromagnetischen Strahlung angeordnet. An dieser Stelle kann die durch Absorption im Tropfen reduzierte Intensität gemessen werden. Senkrecht zu dieser Strahlrichtung angeordnet ist ein weiterer Detektor 22'. An dieser Stelle kann die Intensität von durch Fluoreszenz im Tropfen erzeugter elektromagnetischer Strahlung gemessen werden. Lang gestrichelt resp. kurz gestrichelt sind die Abschnitte 23', 23'' des Strahlungspfad zwischen dem Tropfen und dem Detektor für die Absorptionsmessung resp. für die Fluoreszenzmessung eingezeichnet. In der hier gezeigten Ausführungsform kann die Strahlungsquelle 21 sowohl als die eingestrahlte Intensität für die Absorptionsmessung zur Verfügung stellen, als auch die Anregung einer Fluoreszenz bewirken. In der gezeigten Ausführungsform liegen der erste Lichtpfad 1, der zweite Lichtpfad 2, der zum Detektor 22' für Absorption führende Abschnitt des Strahlungspfads 23' und der zum Detektor 22'' für Fluoreszenz führende Abschnitt des Strahlungspfads 23'' alle in einer gemeinsamen Ebene.

Es besteht auch die Möglichkeit, alternativ oder zusätzlich, Fluoreszenz an einer anderen z-Position zu messen. So ist auch folgende Vorgehensweise im Rahmen der Erfindung denkbar: Bestimmung der Tropfenposition in x und y mittels der Vorrichtung zur Positionsbestimmung und anschließendes Verfahren um eine vordefinierte Strecke in z-Richtung. D.h. die Ebene der Messung muss nicht zwingend mit der Ebene der Positionsbestimmung übereinstimmen.

Bezugszeichenliste

| | | |
|---|---|---|
| 1 | erster Lichtpfad | |
| 2 | zweiter Lichtpfad | |
| 3 | Positionsbestimmungsraum | |
| 4 | Aufnahmebereich der Kamera | |
| 5 | Tropfen | |
| 6 | Schnittpunkt | |
| 7 | Punkt auf erstem Reflektorelement | |
| 8 | Punkt auf zweitem Reflektorelement | |
| 9 | Punkt auf Strahlteiler | |
| 10 | Vorrichtung | |
| 11 | erstes Reflektorelement | |
| 12 | zweites Reflektorelement | |
| 13 | Strahlteiler | |
| 14 | Kamera | |
| 15 | Objektiv | |
| 16 | erstes Beleuchtungselement | |
| 17 | zweites Beleuchtungselement | |
| 18 | Gehäuse (enthält Kamera) | |
| 20 | Messgerät | |
| 21 | Strahlungsquelle | |
| 22, 22', 22'' | Detektor | |
| 23 | Strahlungspfad | |
| 23', 23'' | Abschnitte des Strahlungspfads vor dem Detektor | |
| 24 | Ellipsoidspiegel | |
| 30 | Pipettierroboter | |
| 31 | Pipettenspitze | |
| 32 | Halterung für Standard Mikroplatten | |
| 33 | Mikroplatte | |
| 34 | Pipettierkanal | |
| 41 | Relaisoptik | |
| 42 | Linse | |
| 43 | LED | |
| 44 | C-Mount der Kamera | |
| D | Durchmesser des Tropfens | |
| E1 | erste Ebene | |
| E2 | zweite Ebene | |
| $\alpha$ | Winkel zwischen erster und zweiter Ebene | |
| G | Richtung der Schwerkraft | |

**Patentansprüche**

1.   Vorrichtung (10) zur Bestimmung einer Position und/oder einer Ausdehnung eines Tropfens (5) in einem Positionsbestimmungsraum (3), wobei die Vorrichtung eine Kamera (14) mit einem Objektiv (15), einen Strahlteiler (13) im Aufnahmebereich (4) der Kamera, ein erstes Reflektorelement (11) und ein zweites Reflektorelement (12) umfasst, wobei die Vorrichtung so ausgestaltet ist, dass Licht vom Positionsbestimmungsraum (3) herkommend sowohl entlang einem ersten Lichtpfad (1) ins Objektiv der Kamera gelangen kann als auch entlang einem zweiten Lichtpfad (2) ins Objektiv der Kamera gelangen kann,

wobei Licht entlang dem zweiten Lichtpfad (2) an dem zweiten Reflektorelement (12) in Richtung Strahlteiler (13) reflektierbar und am Strahlteiler zum Objektiv (15) hin reflektierbar ist,

**dadurch gekennzeichnet, dass**
Licht entlang dem ersten Lichtpfad (1) an dem ersten Reflektorelement (11) in Richtung Strahlteiler reflektierbar und durch den Strahlteiler (13) hindurch zum Objektiv (15) hin durchstrahlbar ist,
dass sich der erste (1) und der zweite Lichtpfad (2) in einem Schnittpunkt (6) im Positionsbestimmungsraum (3) schneiden,
dass Abschnitte des ersten (1) und zweiten Lichtpfades (2) zwischen dem Schnittpunkt (6) im Positionsbestimmungsraum und dem ersten (11) beziehungsweise dem zweiten (12) Reflektorelement eine erste Ebene (E1) definieren, wobei Abschnitte des ersten und zweiten Lichtpfades zwischen dem Strahlteiler und dem ersten (11) beziehungsweise zweiten (12) Reflektorelement eine zweite Ebene (E2) definieren, und dass die zweite Ebene gegenüber der ersten Ebene gekippt angeordnet ist.

2. Vorrichtung (10) gemäss Anspruch 1, wobei sich der erste und der zweite Lichtpfad rechtwinklig schneiden.

3. Vorrichtung (10) gemäss Anspruch 1 oder 2, wobei eine erste Pfadlänge des ersten Lichtpfads (1) vom Schnittpunkt (6) im Positionsbestimmungsraum bis zum Strahlteiler (13) gleich gross ist wie eine zweite Pfadlänge des zweiten Lichtpfades (2) vom Schnittpunkt (6) im Positionsbestimmungsraum bis zum Strahlteiler (13).

4. Vorrichtung (10) gemäss einem der Ansprüche 1 bis 3, wobei die Vorrichtung weiter ein erstes (16) und eine zweites (17) Beleuchtungselement umfasst, wobei das erste Beleuchtungselement (16) und das erste Reflektorelement (11) auf einander gegenüberliegenden Seiten des Positionsbestimmungsraums (3) angeordnet sind, wobei das zweite Beleuchtungselement (17) und das zweite Reflektorelement (12) auf einander gegenüberliegenden Seiten des Positionsbestimmungsraums angeordnet sind, wobei das erste Beleuchtungselement dazu ausgelegt ist, einen Tropfen (5) im Positionsbestimmungsraum parallel zu einer Richtung des ersten Lichtpfads (1) vor dem ersten Reflektorelement (11) zu beleuchten und wobei das zweite Beleuchtungselement dazu ausgelegt ist, den Tropfen im Positionsbestimmungsraum parallel zu einer Richtung des zweiten Lichtpfads (2) vor dem zweiten Reflektorelement (12) zu beleuchten.

5. Vorrichtung (10) gemäss Anspruch 4, umfassend ein erstes (16) und ein zweites Beleuchtungselement (17), insbesondere wobei das erste und das zweite Beleuchtungselement im Wesentlichen baugleich aufgebaut sind, wobei das erste und das zweite Beleuchtungselement dazu ausgelegt sind, den Positionsbestimmungsraum (3) zeitlich abwechselnd gar nicht zu beleuchten oder je einzeln zu beleuchten.

6. Vorrichtung (10) gemäss einem der Ansprüche 1 bis 5, wobei der Strahlteiler (13), das erste Reflektorelement (11), das zweite Reflektorelement (12) und die Kamera (14) ausserhalb eines Bereichs liegen, welcher den Positionsbestimmungsraum und dessen gedachte Fortsetzung in Richtung (G) der Schwerkraft umfasst.

7. Messgerät (20) zur Messung einer Absorption einer elektromagnetischen Strahlung in einem Tropfen (5) und/oder zur Messung einer durch eine elektromagnetische Strahlung in einem Tropfen (5) angeregte Fluoreszenz, wobei das Messgerät eine Vorrichtung (10) nach einem der Ansprüche 1 bis 6 umfasst, wobei das Messgerät weiter eine Strahlungsquelle (21) elektromagnetischer Strahlung und einen Detektor (22, 22', 22'') für elektromagnetische Strahlung umfasst, wobei das Messgerät derart ausgestaltet ist, dass elektromagnetische Strahlung entlang einem Strahlungspfad (23) ausgehend von der Strahlungsquelle via einen Tropfen im Positionsbestimmungsraum beim Detektor eintreffen kann und wobei die Vorrichtung dazu ausgelegt ist, die Position des Tropfens in Relation zum Strahlungspfad zu bestimmen.

8. Messgerät (20) gemäss Anspruch 7, wobei sich der erste Lichtpfad (1), der zweite Lichtpfad (2) und der Strahlungspfad (23) in einem gemeinsamen Schnittpunkt (6) im Positionsbestimmungsraum (3) schneiden.

9. Pipettierroboter (30) mit einer Vorrichtung (10) gemäss einem der Ansprüche 1 bis 6, wobei der Pipettierroboter dazu ausgelegt ist

- eine Pipettenspitze (31) in den Positionsbestimmungsraum (3) der Vorrichtung zu bewegen,
- einen Tropfen (5) einer Flüssigkeit ausserhalb einer Öffnung der Pipettenspitze auszubilden, und

- die Position des ausgebildeten Tropfens im Positionsbestimmungsraum anhand mindestens eines mit der Kamera (14) aufgenommenen Bildes zu bestimmen.

10. Pipettierrobotor (30) mit einem Messgerät (20) nach Anspruch 7 oder 8 und mit Mitteln zum Bewegen mindestens einer Pipettenspitze (31) in mindestens einer Bewegungsrichtung, wobei der Pipettierroboter dazu ausgelegt ist

- die mindestens eine Pipettenspitze in den Positionsbestimmungsraum (3) der Vorrichtung (10) zu bewegen,
- einen Tropfen (5) einer Flüssigkeit ausserhalb einer Öffnung der Pipettenspitze auszubilden,
- die Position und/oder eine Ausdehnung des ausgebildeten Tropfens im Positionsbestimmungsraum anhand mindestens eines mit der Kamera (14) aufgenommenen Bildes zu bestimmen, und
- unter Verwendung des Messgeräts (20) eine Absorption einer elektromagnetischen Strahlung in dem Tropfen zu messen und/oder eine durch eine elektromagnetische Strahlung in einem Tropfen angeregte Fluoreszenz zu messen.

11. Verfahren zur Bestimmung einer Konzentration einer Substanz in einem Tropfen (5) mittels eines Messgeräts (20) nach einem der Ansprüche 7 oder 8, umfassend die Schritte:

- Einbringen des Tropfens (5) in den Positionsbestimmungsraum (3) oder Erzeugen des Tropfens im Positionsbestimmungsraum,
- Bestimmen der Position der Position des Tropfens in Relation zum Strahlengang (23) des Messgeräts,
- Bestimmen der Ausdehnung des Tropfens,
- Ermitteln der optischen Pfadlänge des Strahlengangs im Tropfen,
- Messen einer Absorption einer elektromagnetischen Strahlung, wobei elektromagnetische Strahlung entlang dem Strahlungspfad ausgehend von der Strahlungsquelle (21) den Tropfen im Positionsbestimmungsraum durchquert und im Detektor (22, 22', 22") eintrifft, wobei eine Strahlungsintensität der Strahlungsquelle mit einer Strahlungsintensität im Detektor in Bezug gesetzt wird, und
- Berechnen der Konzentration in Funktion der gemessenen Absorption und der ermittelten optischen Pfadlänge im Tropfen.

12. Verfahren gemäss Anspruch 11, wobei eine erste Ausdehnung des Tropfens (5) vor dem Schritt des Messens bestimmt wird, wobei eine zweite Ausdehnung des Tropfens nach dem Schritt des Messens bestimmt wird, und wobei ein Mittelwert der ersten und zweiten Ausdehnung des Tropfens der Bestimmung der Konzentration der Substanz zugrunde gelegt wird.

13. Verfahren gemäss einem der Ansprüche 11 oder 12, wobei das Verfahren ein Verfahren zur Bestimmung einer Konzentration von RNA, DNA oder Proteinen ist, wobei die elektromagnetische Strahlung eine für RNA, DNA oder Proteine charakteristische Wellenlänge hat.

14. Verfahren zum Halten eines Tropfens (5) im Positionsbestimmungsraum (3) eines Pipettierroboters (30) nach Anspruch 9, wobei das Verfahren die wiederholte Anwendung der folgenden Schritte umfasst:

- Bestimmen einer Ist-Position eines an der Öffnung einer Pipettenspitze (31) des Pipettierroboters ausgebildeten Tropfens im Positionsbestimmungsraum (3) anhand mindestens eines mit der Kamera (14) aufgenommenen Bildes,
- Ermitteln einer Abweichung der bestimmten Ist-Position von einer vorgegebenen Soll-Position, und
- Bewegen der Pipettenspitze in eine Richtung, welche die Ist-Position näher an die Soll-Position bringt.

15. Verfahren zur Regelung einer Tropfengrösse eines Tropfens (5) im Positionsbestimmungsraum (3) eines Pipettierroboters (30) nach Anspruch 9, wobei das Verfahren die wiederholte Anwendung der folgenden Schritte umfasst:

- Bestimmen einer Ist-Tropfengrösse eines an der Öffnung einer Pipettenspitze (31) des Pipettierroboters ausgebildeten Tropfens im Positionsbestimmungsraum (3) anhand mindestens eines mit der Kamera (14) aufgenommenen Bildes,
- Ermitteln einer Abweichung der bestimmten Ist-Tropfengrösse von einer vorgegebenen Soll-Tropfengrösse, und
- Ansaugen von Flüssigkeit in die Pipettenspitze oder Ausstossen von Flüssigkeit aus der Pipettenspitze, wobei Ansaugen gewählt wird, wenn die Ist-Tropfengrösse grösser als die Soll-Tropfengrösse ist und wobei Ausstossen gewählt wird, wenn die Ist-Tropfengrösse kleiner als die Soll-Tropfengrösse ist.

## Claims

1. Apparatus (10) for the determination of a position and/or an extension of a drop (5) in a position determination space (3), wherein the apparatus comprises a camera (14) with an objective (15), a beam splitter (13) in the recording area (4) of the camera, a first reflector element (11) and a second reflector element (12), wherein the apparatus is designed in such a manner that light arriving from the position determination space (3) can get into the objective of the camera both along a first light path (1) and also along a second light path (2), wherein light along the second path (2) is reflectable on the second reflector element (12) in beam splitter (13) direction and is reflectable on the beam splitter towards the objective (15), **characterized in that**

   light along the first light path (1) is reflectable on the first reflector element (11) in beam splitter direction and is transmittable through the beam splitter (13) towards the objective (15),
   **in that** the first (1) and the second light path (2) intersect at an intersection (6) in the position determination space,
   **in that** sections of the first (1) and second light path (2) define a first plane (E1) between the intersection (6) in the position determination space and the first (11) respectively the second (12) reflector element,
   wherein sections of the first and second light path define a second plane (E2) between the beam splitter and the first (11) respectively second (12) reflector element, and
   **in that** the second plane is tilted with respect to the first plane.

2. Apparatus (10) according to claim 1, wherein the first and the second light path intersect orthogonally.

3. Apparatus (10) according to claim 1 or 2, wherein a first path length of the first light path (1) from the intersection (6) in the position determination space to the beam splitter (13) is equal as a second path length of the second light path (2) from the intersection (6) in the position determination space to the beam splitter (13) .

4. Apparatus (10) according to any of the claims 1 to 3, wherein the apparatus further comprises a first (16) and a second (17) lighting element, wherein the first lighting element (16) and the first reflector element (11) are arranged on opposite sides of the position determination space (3), wherein the second lighting element (17) and the second reflector element (12) are arranged on opposite sides of the position determination space (3), wherein the first lighting element is configured to illuminate a drop (5) in the position determination space parallel to a direction of the first light path (1) in front of the first reflector element (11) and wherein the second lighting element is configured to illuminate the drop in the position determination space parallel to a direction of the second light path (2) in front of the second reflector element (12) .

5. Apparatus (10) according to claim 4, comprising a first (16) and a second lighting element (17), in particular wherein the first and the second lighting element are substantially identical in construction, wherein the first and the second lighting element are configured to not illuminate the position determination space (3) or to illuminate each individually alternating in time.

6. Apparatus (10) according to any of the claims 1 to 5, wherein the beam splitter (13), the first reflector element (11), the second reflector element (12) and the camera (14) are outside an area which comprises the position determination space and its imaginary continuation in direction (G) of gravity.

7. Measurement device (20) for the measurement of an absorption of an electromagnetic radiation in a drop (5) and/or for the measurement of a fluorescence excited by an electromagnetic radiation in a drop (5), wherein the measurement device comprises an apparatus (10) according to any of the claims 1 to 6, wherein the measurement device further comprises a radiation source (21) of electromagnetic radiation and a detector (22, 22', 22") for electromagnetic radiation, wherein the measurement device is designed in a manner that electromagnetic radiation can arrive at the detector along a radiation path (23) starting from the radiation source via a drop in the position determination space and wherein the apparatus is configured to determine the position of the drop in relation to the radiation path.

8. Measurement device (20) according to claim 7, wherein the first light path (1), the second light path (2) and the radiation path (23) intersect in a common intersection (6) in the position determination space (3).

9. Pipetting robot (30) with an apparatus (10) according to any of the claims 1 to 6, wherein the pipetting robot is configured to

   - move a pipette tip (31) into the position determination space (3) of the apparatus,
   - form a drop (5) of a liquid outside an opening of the pipette tip, and
   - determine the position of the formed drop in the position determination space based on at least one picture taken with the camera (14).

**10.** Pipetting robot (30) with a measurement device (20) according to claim 7 or 8 and with means for the moving of at least one pipette tip (31) in at least one direction of motion, wherein the pipetting robot is configured to

- move the at least one pipette tip in the position determination space (3) of the apparatus (10),
- form a drop (5) of a liquid outside an opening of the pipette tip,
- determine the position of the formed drop in the position determination space based on at least one picture taken with the camera (14), and
- measure an absorption of an electromagnetic radiation in the drop by using the measurement device (20) and/or measure a fluorescence excited in a drop by an electromagnetic radiation.

**11.** Method for the determination of a concentration of a substance in a drop (5) by a measurement device (20) according to any of the claims 7 or 8, comprising the steps of:

- introducing the drop (5) into the position determination space (3) or generating the drop in the position determination space,
- determining the position of the drop in relation to the beam (23) of the measurement device,
- determining the extension of the drop,
- determining the optical path length of the beam in the drop,
- measuring of an absorption of an electromagnetic radiation, wherein electromagnetic radiation crosses the drop in the position determination space along the radiation path starting from the radiation source (21) and arrives at the detector (22, 22', 22"), wherein a radiation intensity of the radiation source is put into relation with a radiation intensity at the detector, and
- calculating the concentration as a function of the measured absorption and the determined optical path length in the drop.

**12.** Method according to claim 11, wherein a first extension of the drop (5) is determined before the step of measuring, wherein a second extension of the drop is determined after the step of measuring, and wherein an average value of the first and second extension is used for the determination of the concentration of the substance.

**13.** Method according to any of the claims 11 or 12, wherein the method is a method for the determination of a concentration of RNA, DNA or proteins, wherein the electromagnetic radiation has a wavelength characteristic for RNA, DNA or proteins.

**14.** Method for the holding of a drop (5) in the position determination space (3) of a pipetting robot (30) according to claim 9, wherein the method comprises the repeating use of the following steps:

- determination of an actual position of a drop formed at the opening of a pipette tip (31) of the pipetting robot in the position determination space (3) based on at least one picture taken with the camera (14),
- determination of a deviation of the determined actual position from a predetermined nominal position, and
- moving the pipette tip in a direction which brings the actual position closer to the nominal position.

**15.** Method for controlling of a drop size of a drop (5) in the position determination space (3) of a pipetting robot (30) according to claim 9, wherein the method comprises the repeated use of the following steps:

- determining the actual drop size of a drop formed at the opening of a pipette tip (31) of the pipetting robot in the position determination space (3) based on at least one picture taken with the camera (14),
- determination of a deviation of the determined actual drop size from a predetermined nominal drop size, and
- suction of liquid into the pipette tip or ejection of liquid from the pipette tip, wherein suction is chosen when the actual drop size is larger than the nominal drop size, and wherein ejection is chosen when the actual drop size is smaller than the nominal drop size.

**Revendications**

**1.** Dispositif (10) pour déterminer une position et/ou une taille d'une goutte (5) dans un espace de détermination de la position (3), le dispositif comprenant une caméra (14) avec un objectif (15), un séparateur de faisceau (13) dans la zone de capture d'image (4) de la caméra, un premier élément réflecteur (11) et un deuxième élément réflecteur (12), le dispositif étant conçu de telle sorte que la lumière provenant de l'espace de détermination de la position (3) peut atteindre l'objectif de la caméra aussi bien le long d'une première trajectoire de lumière (1) que le long d'une deuxième trajectoire de lumière (2), la lumière le long de la deuxième trajectoire de lumière (2) pouvant être réfléchie sur le deuxième élément réflecteur (12) en direction du séparateur de faisceau (13) et pouvant être réfléchie sur le séparateur de faisceau en direction de l'objectif (15),

caractérisé en ce que la lumière le long de la première trajectoire de lumière (1) peut être réfléchie sur le premier élément réflecteur (11) en direction du séparateur de faisceau et peut être transmise à l'objectif (15) à travers le séparateur de faisceau (13),

**en ce que** la première (1) et la deuxième trajectoire de lumière (2) se coupent en un point d'intersection (6) dans l'espace de détermination de la position (3),

**en ce que** des sections de la première (1) et de la deuxième trajectoire de lumière (2) définissent entre le point d'intersection (6) dans l'espace de détermination de la position et le premier (11) ou le deuxième (12) élément réflecteur un premier plan (E1), des sections de la première et de la deuxième trajectoires de lumière définissant entre le séparateur de faisceau et le premier (11) ou le deuxième (12) élément réflecteur un deuxième plan (E2), et **en ce que** le deuxième plan est disposé incliné par rapport au premier plan.

2. Dispositif (10) selon la revendication 1, la première et la deuxième trajectoires de lumière se coupant à angle droit.

3. Dispositif (10) selon la revendication 1 ou 2, dans lequel une première longueur de la première trajectoire de lumière (1) depuis le point d'intersection (6) dans l'espace de détermination de la position jusqu'au séparateur de faisceau (13) est égale à une deuxième longueur de la deuxième trajectoire de lumière (2) depuis le point d'intersection (6) dans l'espace de détermination de la position jusqu'au séparateur de faisceau (13).

4. Dispositif (10) selon l'une des revendications 1 à 3, dans lequel le dispositif comprend en outre un premier (16) et un deuxième (17) élément d'éclairage, le premier élément d'éclairage (16) et le premier élément réflecteur (11) étant agencés sur des côtés opposés de l'espace de détermination de la position (3), le deuxième élément d'éclairage (17) et le deuxième élément réflecteur (12) étant agencés sur des côtés opposés de l'espace de détermination de la position, le premier élément d'éclairage étant conçu pour éclairer devant le premier élément réflecteur (11) une goutte (5) dans l'espace de détermination de la position parallèlement à la direction de la première trajectoire de lumière (1), et le deuxième élément d'éclairage étant conçu pour éclairer devant le deuxième élément réflecteur (12) la goutte dans l'espace de détermination de la position parallèlement à la direction de la deuxième trajectoire de lumière (2).

5. Dispositif (10) selon la revendication 4, comprenant un premier (16) et un deuxième élément d'éclairage (17), le premier et le deuxième éléments d'éclairage étant en particulier de conception sensiblement identique, le premier et le deuxième éléments d'éclairage étant conçus pour ne pas éclairer du tout par alternance l'espace de détermination de la position (3) ou pour l'éclairer individuellement.

6. Dispositif (10) selon l'une des revendications 1 à 5, dans lequel le séparateur de faisceau (13), le premier élément réflecteur (11), le deuxième élément réflecteur (12) et la caméra (14) sont situés en dehors d'une zone qui comprend l'espace de détermination de la position et son prolongement imaginaire en direction (G) de la gravité.

7. Appareil de mesure (20) pour mesurer l'absorption d'un rayonnement électromagnétique dans une goutte (5) et/ou pour mesurer la fluorescence induite par un rayonnement électromagnétique dans une goutte (5), l'appareil de mesure comprenant un dispositif (10) selon l'une des revendications 1 à 6, l'appareil de mesure comprenant en outre une source (21) de rayonnement électromagnétique et un détecteur (22, 22', 22") pour le rayonnement électromagnétique, l'appareil de mesure étant conçu de telle sorte que le rayonnement électromagnétique peut parvenir au détecteur le long d'un trajet de rayonnement (23) depuis la source de rayonnement via une goutte dans l'espace de détermination de la position, et le dispositif étant conçu pour déterminer la position de la goutte par rapport au trajet de rayonnement.

8. Appareil de mesure (20) selon la revendication 7, dans lequel la première trajectoire de lumière (1), la deuxième trajectoire de lumière (2) et le trajet de rayonnement (23) se coupent en un point d'intersection commun (6) dans l'espace de détermination de la position (3).

9. Robot de pipetage (30) comprenant un dispositif (10) selon l'une des revendications 1 à 6, le robot de pipetage étant conçu pour

    - déplacer un embout de pipette (31) dans l'espace de détermination de la position (3) du dispositif,
    - former une goutte (5) d'un liquide en dehors de l'ouverture de l'embout de pipette, et
    - déterminer la position de la goutte formée dans l'espace de détermination de la position à l'aide d'au moins une photo prise par la caméra (14).

10. Robot de pipetage (30) comprenant un appareil de mesure (20) selon la revendication 7 ou 8, et comprenant des moyens pour déplacer au moins un embout de pipette (31) dans au moins une direction de déplacement, le robot de pipetage étant conçu pour

    - déplacer le au moins un embout de pipette dans l'espace de détermination de la position (3) du dispositif (10),
- former une goutte (5) d'un liquide en dehors de l'ouverture de l'embout de pipette,
- déterminer la position et/ou la taille de la goutte formée dans l'espace de détermination de la position à l'aide d'au moins une photo prise par la caméra (14), et
- à l'aide de l'appareil de mesure (20) mesurer l'absorption d'un rayonnement électromagnétique dans la goutte et/ou mesurer la fluorescence induite par un rayonnement électromagnétique dans une goutte.

11. Procédé pour déterminer la concentration d'une substance dans une goutte (5) à l'aide d'un appareil de mesure (20) selon l'une des revendications 7 ou 8, comprenant les étapes consistant à :

- amener la goutte (5) dans l'espace de détermination de la position (3) ou former la goutte dans l'espace de détermination de la position,
- déterminer la position de la goutte par rapport au trajet optique (23) de l'appareil de mesure,
- déterminer la taille de la goutte,
- définir la longueur du trajet optique du faisceau dans la goutte,
- mesurer l'absorption d'un rayonnement électromagnétique, le rayonnement électromagnétique le long du chemin de rayonnement partant de la source de rayonnement (21) traversant la goutte dans l'espace de détermination de la position et atteignant le détecteur (22, 22', 22"), l'intensité de rayonnement de la source de rayonnement étant mise en relation avec l'intensité de rayonnement dans le détecteur, et
- calculer la concentration en fonction de l'absorption mesurée et de la longueur de chemin optique définie dans la goutte.

12. Procédé selon la revendication 11, dans lequel on détermine une première taille de la goutte (5) avant l'étape qui consiste à mesurer, une deuxième taille de la goutte étant déterminée après l'étape de mesure, et dans lequel on utilise une valeur moyenne de la première et de la deuxième taille de la goutte pour déterminer la concentration de la substance.

13. Procédé selon l'une des revendications 11 ou 12, le procédé étant un procédé pour déterminer la concentration d'ARN, d'ADN ou de protéines, le rayonnement électromagnétique ayant une longueur d'onde caractéristique de l'ARN, de l'ADN ou des protéines.

14. Procédé pour maintenir une goutte (5) dans l'espace de détermination de la position (3) d'un robot de pipetage (30) selon la revendication 9, le procédé comprenant l'application répétée des étapes suivantes consistant à :

- déterminer la position réelle d'une goutte formée au niveau de l'ouverture d'un embout de pipette (31) du robot de pipetage dans l'espace de détermination de la position (3) à l'aide d'au moins une photo prise par la caméra (14),
- déterminer un écart entre la position réelle déterminée et la position théorique prédéterminée, et
- déplacer l'embout de pipette dans une direction qui rapprochera la position réelle de la position théorique.

15. Procédé pour régler la taille d'une goutte (5) dans l'espace de détermination de la position (3) d'un robot de pipetage (30) selon la revendication 9, le procédé comprenant l'application répétée des étapes suivantes consistant à :

- déterminer la taille réelle d'une goutte formée au niveau de l'ouverture d'un embout de pipette (31) du robot de pipetage dans l'espace de détermination de la position (3) à l'aide d'au moins une photo prise par la caméra (14),
- déterminer un écart entre la taille réelle définie de la goutte et la taille théorique prédéterminée, et
- aspirer du liquide dans l'embout de pipette ou éjecter du liquide de l'embout de pipette, l'aspiration étant choisie lorsque la taille de goutte réelle est supérieure à la taille de goutte nominale et l'éjection de liquide étant choisie lorsque la taille de goutte réelle est inférieure à la taille de goutte nominale.

Fig. 1

Fig. 2

Fig. 3.a)

Fig. 3.b)

Fig. 3.c)

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014114500 A1

- US 4328801 A